# EUROPÄISCHE PATENTSCHRIFT

(11) **EP 0 384 291 B1**
(45) Veröffentlichungstag und Bekanntmachung des Hinweises auf die Patenterteilung: **09.02.1994**
(21) Anmeldenummer: 90102924.9
(22) Anmeldetag: 15.02.1990
(51) Int. Cl.: F16J 15/32, F16J 15/40, B01F 15/00

(54) **Mischerwellen-Dichtung mit geteilten Dichtungselementen**
Mixer shaft seal with split sealing elements
Joint pour axe de mélangeur comportant des éléments en plusieurs parties

(30) Priorität: 24.02.1989 DE 3905708
(43) Veröffentlichungstag der Anmeldung: 29.08.1990
(73) Patentinhaber: ELBA-WERK Maschinen-Gesellschaft mbH, D-76275 Ettlingen (DE)
(72) Erfinder: Pippinger, Horst, D-7500 Karlsruhe 41 (DE)
(74) Vertreter: Zahn, Roland, Dipl.-Ing.

(56) Entgegenhaltungen:
- DE-A- 2 356 263
- DE-A- 2 725 028
- DE-A- 3 736 435
- US-A- 3 521 890

## Beschreibung

Die vorliegende Erfindung bezieht sich auf eine Mischerwellen-Dichtung nach dem Oberbegriff des Patentanspruchs 1.

Eine Mischerwellen-Dichtung dieser Art ist Gegenstand der DE-A-23 56 263, sowie der älteren Patentanmeldung DE-A-37 36 435.9. Diese Dichtungen und Lagerungen haben sich von der Funktion her gesehen im großen und ganzen hervorragend bewährt.

Angesichts des Alters der aus der DE-A-23 56 263 bekannten Konzeption für eine Mischerwellen-Dichtung und -Lagerung nahm es nicht Wunder, daß der im Hinblick auf Montage und Demontage erforderliche Aufwand zunehmend für vereinfachungs- und damit verbesserungsbedürftig erachtet wurde. Schließlich ist es hier in Verbindung mit verschleißbedingten Demontagearbeiten erforderlich, quasi die komplette Dichtungseinheit zu demontieren (und wieder - mit neuen Dichtelementen bzw. Verschleißteilen - zu montieren). Darüberhinaus ist es in Folge der konstruktiven Gesamtkonzeption in Verbindung mit derartigen Demontagearbeiten stets auch erforderlich, die gesamte Antriebseinheit und das Lagergehàuse der Mischerwelle zu demontieren. Dabei muß nicht selten der auf der Mischerwelle sitzende Teil der Antriebseinheit,z.B.das Kettenrad zerstört werden, da aufgrund des sogenannten Passungsrost eine normale Demontage gar nicht mehr möglich ist.

Im Hinblick auf die vorgenannte Problematik bei Montage- und Demontagearbeiten war im Rahmen der älteren Patentanmeldung DE-A-37 36 435.9 bereits eine verbesserte bzw. vereinfachte Mischerwellen-Dichtung vorgeschlagen worden. Dabei sind die Verschleißteile der Dichtung dadurch relativ einfach auswechselbar, daß sie jeweils geteilt ausgeführt sind. Damit ist es zwar möglich, die einzelnen Verschleißteile je für sich auszuwechseln und etwa weitere auf dem äußeren Wellenstumpf vorgesehene Funktions- bzw. Antriebselemente unverändert belassen zu können. Die Zugänglichkeit zu den einzelnen Verschleißteilen ist jedoch ausgesprochen ungünstig und somit wartungsunfreundlich.Darüberhinaus hat dieser Vorschlag den Nachteil, daß der den Dichtspalt definierende Verschleißring mit seiner Befestigungsmutter verschlissen wird und dann ebenfalls nicht mehr normal demontiert werden kann, wenn der Schraubkopf zerstört ist.

Die der vorliegenden Erfindung zugrunde liegende Aufgabe besteht darin, eine Mischerwellen-Dichtung der gattungsgemäßen Art anzugeben, die ohne jede Behinderung seitens der Antriebseinheit und/oder seitens des Lagergehäuses montiert und demontiert werden kann, wenn ein Verschleißelement an der Schnittstelle bzw. Übergangsstelle zwischen den statischen und den rotierenden Teilen des Mischers ausgewechselt werden muß.

Diese Aufgabe wird dem Grundgedanken der vorliegenden Erfindung zufolge dadurch gelöst, daß die Kontruktionselemente der Dichtung und die Seitenwand des Mischbehälters an der das Lagergehäuse anschlägt konstruktiv so ausgebildet und aufeinander abgestimmt sind, daß die Dichtung vom Innenraum des Mischers her montier- und demontierbar ist.

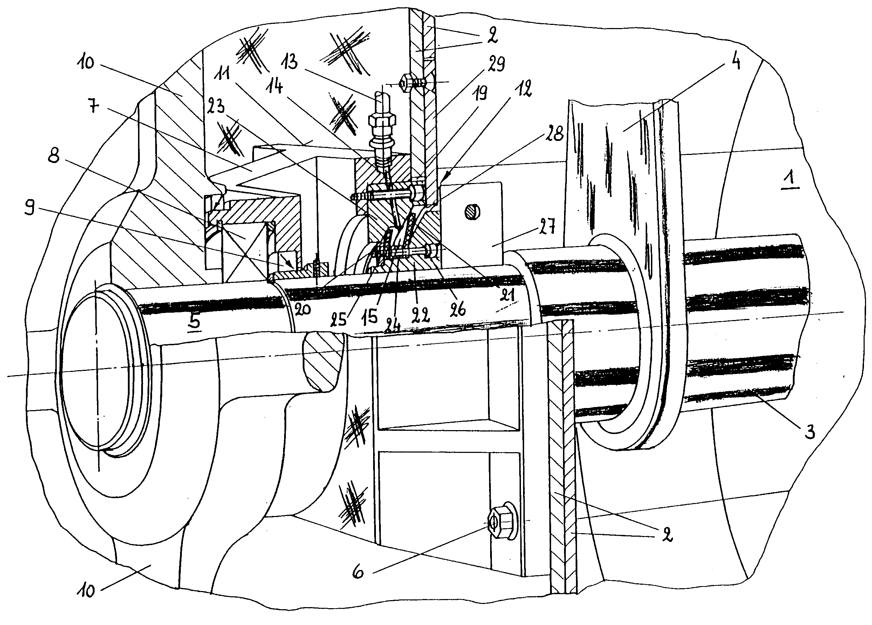

Eine besondere konstruktive Ausgestaltung sowie Weiterbildungen der erfindungsgemäßen Mischerwellen-Dichtung sind Gegenstand der Unteransprüche. Die Einzelheiten dieser Dichtung werden im folgenden anhand der Zeichnung näher erläutert. Diese zeigt
eine aufgebrochene Mischerwellen-Dichtung in Perspektivdarstellung.

Ein Mischbehälter 1 einer Betonmischmaschine ist seitlich durch eine Seitenwand 2 begrenzt. Durch diese Seitenwand 2 ist ein Wellenstumpf 5 einer Mischerwelle 3 hindurchgeführt, die das eigentliche - nicht gezeichnete - Mischwerkzeug trägt und bewegt. Das Mischwerkzeug ist dazu über Tragarme 4 gehalten, die form- und kraftschlüssig mit der Mischerwelle 3 verbunden sind.

Der Wellenstumpf 5 der Mischerwelle 3 ragt seitlich über die Seitenwand 2 nach außen und die diesbezüglich zugrunde liegende grundsätzliche Problemstellung besteht darin, die Öffnung in der Seitenwand 2 im Bereich des Übergangs vom Mischerinnenraum zum Außenraum so abzudichten, daß kein Beton nach außen dringen kann, und daß die Mischerwelle 3 nicht etwa durch erstarrte bzw. erstarrende Betonreste in ihrer Drehbewegung behindert wird. Diese die Dichtung verifizierenden Konstruktionsmittel sind im Falle der zeichnerisch dargestellten Mischerwellen-Dichtung so ausgebildet, daß sie - wie auch in der Patentanmeldung DE-A-37 36 435.9 vorgeschlagen - je für sich demontiert werden können. Im Unterschied zu dieser Konzeption ist die Dichtung jedoch nicht wie bei allen bekannten Mischerwellen-Dichtungen von außen, d.h. vom Wellenstumpf 5 her zu montieren bzw. zu demontieren, sondern sie wird vom Mischerinnenraum her montiert bzw. demontiert.

Im folgenden wird ein konstruktives Ausführungsbeispiel dieser Mischerwellen-Dichtung im Detail beschrieben.

Der Wellenstumpf 5 lagert in einem an der Seitenwand 2 angeschlagenen und mit dieser verschraubten (vergleiche Schraube 6) einstückigen Lagergehäuse 7. Dieses Lagergehäuse 7 weist eine äußere Kammer zur Aufnahme des eigentlichen Mischerwellenlagers 8 auf, das vorzugsweise als Wälzlager ausgebildet ist. Der Außenring dieses Wälzlagers liegt am Lagergehäuse 7 an, der Innenring am Wellenstumpf 5. Das Mischerwellenlager 8 ist mittels beispielsweise einer Lippendichtung 9 zur Seitenwand 2 hin gegen ein Eindringen von Fremdkörpern geschützt. Am Ende des Wellenstumpfes 5 und zwar am Mischerwellenlager 8 anschlagend ist - wie in der Zeichnung angedeutet - ein Kettenrad 10 vorgesehen, über das die Mischerwelle 3 und damit das Mischwerkzeug angetrieben werden.

Das Lagergehäuse 7 weist zwischen der genannten äußeren Kammer und einer an der Seitenwand 2 anschlagenden Grundplatte 11 eine zweite innere Kammer auf, die einerseits die ruhenden Teile der die Dichtung bildenden Kostruktionselemente aufnimmt und die andererseits dem Wellenstumpf 5 gegenüber einen Freiraum definiert, in dem die mit dem Wellenstumpf 5 rotierenden Teile der Dichtung montiert sind.

Die eigentliche Mischerwellen-Dichtung ist wie folgt aufgebaut bzw. setzt sich aus folgenden Elementen zusammen:
Die Grundlage der Dichtung wird durch eine labyrinthartige Kammer 15 gebildet, die über einen schmalen radialen Spalt 12 zum Inneraum des Mischbehälters 1 hin offen ist und die unter Überdruck mit einem Dichtmedium beaufschlagt wird. Dieses Dichtmedium kann dabei grundsätzlich gasförmig, flüssig, pastös oder dergleichen sein.

Global betrachtet kann die genannte Kammer 15 als labyrinthartiges Gebilde betrachtet werden, das einerseits dem Beton im Mischbehälter 1 einen Gegendruck entgegensetzt und das andererseits nach außen hin so dicht ist, daß der Arbeitsdruck, d.h. der Überdruck des Dichtmediums, aufrecht erhalten bleibt. Der Überdruck selbst wird dabei über eine in der Grundplatte 11 des Lagergehäuses 7 eingesetzte Zuleitung 13 für das Dichtmedium aufgebracht, die einen durchgehenden offenen Kanal 14 zur Kammer 15 hin hat.

Diese Kammer 15 an sich ist im Prinzip ein zum Wellenstumpf 5 koaxialer Ringraum, dessen Breite und Höhe so gewählt sind, daß das vom Dichtmedium ausgefüllte Polster ein ausreichendes Volumen aufweist. Der genannte koaxiale Freiraum, also die Kammer 15, wird dabei durch das funktionelle Zusammenwirken zweier Dichtscheiben 20, 21 gebildet, die im Abstand zueinander koaxial zum Wellenstumpf 5 angeordnet sind, und die - radial betrachtet - einerseits fest mit einem Aufnahmekörper 22 verbunden sind und andererseits an einem Dichtring 23 schleifen. Der Aufnahmekörper 22 ist fest mit dem Wellenstumpf 5 verbunden, d.h. er dreht mit der Mischerwelle 3; der Dichtring 23 ist fest im Lagergehäuse 7 fixiert, d.h. er ist ruhender Teil. Die Dichtscheiben 20, 21 drehen mit dem Aufnahmekörper 22 und bilden so eine am Dichtring 23 vorbei rotierende Kammer 15, wobei - wie in der Zeichnung gezeigt - die Zuleitung 13 für das Dichtmedium an der zum Dichtring 23 gehörenden Begrenzungseite dieser Kammer 15 mündet.

Der Dichtring 23 ist - wie erwähnt - fest mit dem Lagergehäuse 7 verbunden, insbesondere verschraubt. Dies ist konstruktiv dadurch realisiert, daß in der Seitenwand 2 eine entsprechende Durchgangsbohrung 19 zum Einfügen des Dichtrings 23 vorgesehen ist, und daß im Lagergehäuse 7 von der Grundplatte 11 her koaxial zum Wellenstumpf 5 eine Hinterschneidung eingearbeitet ist. In diese Hinterschneidung ist formschlüssig der Dichtring 23 eingelegt und so mit dem Lagergehäuse 7 verschraubt. Der Dichtring 23 ist geteilt und kann so nach Lösen der Schraubverbindung zum Mischer-Innenraum hin abgehoben werden.

Der Aufnahmekörper 22 ist - wie erwähnt - mit dem Wellenstumpf 5 verbunden. Der Aufnahmekörper 22 ist ebenfalls geteilt und kann so - nach Lösen seiner nicht dargestellten Klemmverbindung mit dem Wellenstumpf 5 - vom Wellenstumpf 5 abgenommen werden. Am Aufnahmekörper 22 sind die Dichtscheiben 20, 21 fixiert, insbesondere verschraubt. Diesbezüglich hat der Aufnahmekörper 22 etwa die Querschnittsform eines "L", dessen einer Schenkel am Wellenstumpf 5 anliegt und dessen zweiter Schenkel radial vom Wellenstumpf 5 absteht und mit seiner Außenseite zum Mischerinnenraum hin ausgerichtet ist. Dieser radial abstehende zweite Schenkel hat an seiner Innenseite vom freien Rand her eine zunächst konische und dann parallel zur Außenseite liegende Innenseite; der erste Schenkel des "L" hat an der freien Stirnseite einen Absatz.

Bei der Montage des Aufnahmekörpers 22, sowie der Dichtscheiben 20, 21 wird wie folgt vorgegangen:zuerst werden die einseitig geteilten Dichtscheiben 20,21 auf die Welle 5 aufgesteckt und zu einem geschlossenen Ring zusammengesteckt; danach wird der Aufnahmekörper 22 in der richtigen - noch zu beschreibenden - Position am Wellenstumpf 5 festgeklemmt. Auf den ersten Schenkel des "L" werden dann nacheinander die erste Dichtscheibe 21, ein geteilter Distanzring 24, die zweite Dichtscheibe 20 und ein geteilter Anschlagring 25 aufgelegt und vom Mischer-Innenraum her verschraubt (vergleiche Schraube 26). Der Anschlagring 25 wird dabei gegen den genannten Absatz des ersten Schenkels des "L" verspannt und die Dichtscheiben 20, 21 sind fest eingespannt.

Die Dichtscheiben 20, 21 haben - wie in der Zeichnung dargestellt - unterschiedliche Außendurchmesser und zwar so, daß der Außendurchmesser der am zweiten Schenkel des Aufnahemkörpers 22 anliegenden ersten Dichtscheibe 21 größer ist als der der zweiten Dichtscheibe 20. Diesen unterschiedlichen Durchmessern der Dichtscheiben 20, 21 entsprechend weist der geteilte Dichtring 23 zwei schräge Anlaufflächen auf, an denen einerseits die Dichtscheiben 20, 21 schleifen und die im montierten Zustand relativ zur Position der Dichtscheiben 20, 21 so liegen, daß die Dichtscheiben 20, 21 eine Vorspannung erhalten. Im Hinblick auf die Funktion der Dichtscheiben 20, 21, das Austreten von Beton aus dem Mischbehälter 1 zu vermeiden, sind die Dichtscheiben 20, 21 so verspannt, daß sie schräg in Richtung Seitenwand 2 und damit in Richtung Mischbehälter 1 geneigt sind.

Die räumliche An- und Zuordnung des geteilten Dichtrings 23 einerseits und des Aufnahmekörpers 22 andererseits ist so, daß - radial vom Wellenstumpf 5 ausgehend - beide Teile übereinander liegen und über die Dichtscheiben 20, 21 funktionell miteinander verbunden sind. Die Zuordnung zur Seitenwand 2 und zum Mischbehälter 1 selbst ist dabei wie folgt:

Die flanschartige Außenseite des Aufnahmekörpers 22 steht - in Richtung Mischer-Innenraum betrachtet-relativ zur Innenseite der Seitenwand 2 geringfügig vor und schlägt an einem Klemmring 27 an. Dieser ist im Hinblick auf erforderliche Montage- und Demontagearbeiten ebenfalls geteilt ausgebildet und steht an einem umlaufenden Absatz des Wellenstumpfes 5 an; mit dem Wellenstumpf 5 selbst ist der Klemmring 27 kraftschlüssig verbunden. Der Außendurchmesser des Klemmrings 26 ist so gewählt, daß er über eine Bohrung 28 in der Seitenwand 2 radial hinausreicht. Zwischen dieser Seitenwand 2 und dem Klemmring 27 entsteht somit der genannte radiale Spalt 12, über den dem Betondruck im Mischerbehälter 1 über das in die Kammer 15 eingedrückte Dichtmedium entgegengewirkt wird.

Um letztlich Zugang zum geteilten Dichtring 23 zu haben, ist die Seitenwand 2 im Bereich um die genannte Bohrung 28, also radial zum Aufnahmekörper 22 so ausgebildet, daß zum Mischer-Innenraum hin ein geteilter (Schleißblech-) Ring 29 angesetzt ist. Dieser liegt einerseits dem Aufnahmekörper 22 gegenüber und bildet mit dem Klemmring 27 den genannten (Dicht-) Spalt 12; andererseits deckt der Ring 29 teilweise den geteilten Dichtring 23, insbesondere dessen Verbindungsschrauben zum Lagergehäuse 7 ab, so daß dieser nur und erst zugänglich ist, wenn der Ring 29 von der Seitenwand 2 entfernt ist.

Die soweit beschriebene und zeichnerisch dagestellte Mischerwellen-Dichtung läßt sich vom Mischer-Innenraum her nun einfach demontieren. Nach Abnahme des Klemmrings 27 und des (Schleißblech-) Rings 29 sind die Grundelemente der Dichtung, das sind der Aufnahmekörper 22 und der Dichtring 23 zugänglich und nach innen hin ab-nehmbar.

## Patentansprüche

1. Mischerwellen-Dichtung,
insbesondere für Mischbehälter Von Betonmischmaschinen, durch deren Wandung (2) ein Wellenstumpf '(5) der Mischerwelle (3) hindurchgeführt ist,
wobei die Lagerung des Wellenstumpfes (5) in einem an den Mischbehälter (1) angeschlagenen Gehäuse (7) erfolgt,
wobei die Dichtung über mindestens eine für die Montage geteilte und im Betriebszustand einstückig zusammengefügte Dicht-Scheibe (20,21) und eine unter überdruck eines Dichtmediums gehaltene labyrinthartige Kammer (15) erfolgt, und
wobei die labyrinthartige Kammer (15) durch zum Zwecke der Montage und Demontage geteilt ausgeführte Ringelemente (22,23) gebildet ist,
dadurch gekennzeichnet,
daß im Lagergehäuse (7) von der am Mischbehälter (1) anschlagenden Grundplatte (11) her koaxial zum Wellenstumpf (5) eine Hinterschneidung und in der Seitenwand (2) eine dem Durchmesser der Hinterschneidung entsprechende Durchgangsbohrung (19) vorgesehen ist,
daß in den durch die Durchgangsbohrung (19) und die Hinterschneidung gebildeten Ringraum eines der Ringelemente (Dichtring 23) eingesetzt und fest mit dem Lagergehäuse (7) verbunden ist,
daß im Bereich der Durchgangsbohrung (19) das zweite Ringelement (Aufnahmekörper 22) auf der Welle befestigt ist,
das die mindestens eine elastisch am Dichtring (23) anliegende Dichtscheibe (20,21) aufnimmt,
so daß die aus den Ringelementen (22,23) und der Dichtscheibe (20,21) zusammengesetzte Dichtung vom Innenraum des Mischers her montier- und demontierbar ist.

2. Mischerwellen-Dichtung nach Anspruch 1,
dadurch gekennzeichnet,
daß die Durchgangsbohrung (19) zum Innenraum des Mischbehälters (1) hin mittels eines mit der Seitenwand (2) verbundenen geteilten Rings (29) abgedeckt ist,
daß der Ring (29) seinerseits eine zur Achse des Wellenstumpfes (5) koaxiale Bohrung (28) aufweist, in die der geteilte Aufnahmekörper (22) eingesetzt ist, und
daß an den Aufnahmekörper (22) an der dem Innenraum des Mischbehälters (2) zugewandten Seite ein geteilter Klemmring (27) anschlägt, dessen Außendurchmesser größer ist als der Durchmesser der Bohrung (28) im geteilten Ring (29) und der axial betrachtet mit geringem Abstand zum geteilten Ring (29) fixiert ist,
so daß zwischen dem Klemmring (27) und dem Aufnahmekörper (22) mit der geteilten Dichtscheibe (20,21) einerseits und dem Dichtring (23) mit dem geteilten Ring (29) auf der Seitenwand (2) andererseits die labyrinthartige Kammer (15) gebildet ist, die über eine durch den Dichtring (23) geführte Zuleitung (13) mit Dichtmedium beaufschlagbar ist.

3. Mischerwellen-Dichtung nach Anspruch 1 oder 2,
dadurch gekennzeichnet,
daß der Aufnahmekörper 22 zwei zueinander beabstandete Dichtscheiben 20, 21 aufweist,
daß am Dichtring 23 zwei mit den Dichtscheiben 20, 21 korrespondierende Anlaufflächen vorgesehen sind, und
daß die Zuleitung 13 für das Dichtmedium zwischen den Dichtscheiben 20, 21 mündet.

4. Mischerwellen-Dichtung nach Anspruch 3,
dadurch gekennzeichnet,
daß die Dichtscheiben 20, 21 unterschiedliche Durchmesser aufweisen und die Dichtscheibe 20 mit dem kleineren Durchmesser die labyrinthartige Kammer 15 zum freien Ende des Wellenstumpfes 5 hin begrenzt.

5. Mischerwellen-Dichtung nach einem der Ansprüche 1 bis 4,
dadurch gekennzeichnet,
daß die Dichtscheiben 20, 21 über einen geteilten Distanzring 24 und einem geteilten Anschlagring 25 mit dem Aufnahmekörper 22 verschraubt sind.

6. Mischerwellen-Dichtung nach einem der Ansprüche 1 bis 5,
dadurch gekennzeichnet,
daß der geteilte Dichtring 23 im Bereich der Anlage der Dichtscheibe 20, 21 so abgeschrägt ist, daß die Dichtscheiben 20, 21 zur Seitenwand 2 hin schräg stehen und vorgespannt sind.

## Claims

1. Mixer shaft sealing,
especially for mixing containers for concrete mixers, through which walls (2) a shaft hub (5) of the mixer shaft (3) is lead,
whereby the bearing of the shaft hub (5) is accommodated in a housing (7) fitted to the mixing container (11),
whereby the sealing is effected by at least one for the purpose of assembling divided and in case of operational condition as single unit arranged sealing disc (20/21) and by one under high pressure sealing compound media arranged labyrinth kind chamber (15), and
whereby the labyrinth kind chamber (15) is built up by ring elements (22/23) which are divisible for the purpose of assembling and disassembling
characterized in,
that at the bearing housing (7) from the base plate (11), fitted to the mixing container (1), coaxial to the shaft hub (5), a rear backside cut and in the side wall (2) according to the diameter of the rear backside cut a corresponding passage bore (19) is provided, that by the ring room, as formed by the passage bore (19) and the rear backside cut, one of the ring elements (sealing ring 23) will be fitted and fixed to the bearing housing (7),
that in the area of the passage bore (19) the second ring element (insert body 22) is fitted onto the shaft which takes up at least one of the sealing discs (20/21) resting against the seal ring (23) elastically so that, the sealing composed by the ring elements (22/23) and the sealing discs (20/21) can be assembled and disassembled from the inside of the mixer.

2. Mixer shaft sealing according to claim 1,
characterized in
that the passage bore (19) to the inside of the mixing container (1) is covered by means of a divided ring (29) fixed to the side wall (2)
that the ring (29) itself is provided with a coaxial bore (28) in direction to the axle of the shaft hub (5), in which the divided insert body (22) is shifted, and
that at the insert body (22), at the side faced to the inside room of the mixing container (2), a divided clamping ring (27) is affixed, which outer diameter is larger than the diameter of the bore (28) in the divided ring (29) and which looking axially is fixed with insignificant distance to the divided ring (29), so that between the clamping ring (27) and the insert body (22) with the divided sealing discs (20/21) on the one hand and the sealing ring (23) with the divided ring (29) at the side wall (2) on the other hand the labyrinth kind chamber (15) is built, which is chargeable with a sealing compound media by means of a filling pipe (13) lead through the sealing ring (23).

3. Mixer shaft sealing according to claim 1 or 2,
characterized in
that the insert body (22) includes two sealing rings (29/21) arranged in certain distance to each other that at the sealing ring (23) there are provided two contact areas corresponding to the sealing rings (20/21) and
that the filling pipe (13) for the sealing compound media ends between the sealing rings (20/21).

4. Mixer shaft sealing according to claim 3
characterized in
that the sealing discs (20/21) have different diameters and the sealing discs (20) with the smaller diameter terminates the labyrinth kind chamber (15) to the free end of the shaft hub (5).

5. Mixer shaft sealing according to one of the claims 1 to 4,
characterized in
that the sealing discs (20/21) are screwed with the insert body (22) by a divided distance ring (24) and a divided stop ring (25).

6. Mixer shaft sealing according to one of the claims 1 to 5,
charaterized in
that the divided sealing ring (23) in the contact area to the sealing discs (20/21) is chamfered in such way, that the sealing discs (20/21) are oblique to the side wall (2) and are prestressed.

## Revendications

1. Etanchéité de palier d'arbe de malaxeur,
en particulier pour des cuves de malaxage de machines pour le malaxage du béton,
- dont la paroi (2) est traversée par un bout (5) de l'arbre du malaxeur (3),
- le palier du bout d'arbre (5) se trouvant dans un carter (7) accouplé à la cuve de malaxage (1),
- l'étanchéité étant réalisée par au moins un joint d'étanchéite divisible en deux parties pour le montage et constituant une seule entité pendant le fonctionnement (20, 21), et un fluide d'etanchéité en surpression retenu dans une cavité en forme de labyrinthe (15),
- la cavité en forme de labyrinthe (15) étant formée par des éléments annulaires divisibles pour le montage et le démontage (22, 23),
se caratérisant par le fait que,
- dans le carter du palier (7) il est prévu dans la tôle de fond (11) du côte de la fixation sur la cuve de malaxage (1), coaxialement au bout d'arbre (5) une dépouille, et dans la paroi latérale (2) une ouverture circulaire (19) correspondant au diemètre de la dépouille,
- dans la cavite circulaire obtenue à la suite de cette ouverture (19) et de la dépouille l'on insère un élément annulaire (23) qui est fixé sur le carter du palier (7),
- dans la zone de l'ouverture (19) l'on fixe sur l'arbre le deuxième élément annulaire (22),
- celui-ci permettant le montage d'un joint d'étanchéité élastique (20, 21) sur la bague d'étanchéité (23),
- de manière que de dispositif d'étanchéite constitué par les éléments circulaires (22, 23) et les joints d'étanchéité (20, 21) puisse être monté et demonté depuis l'intérieur du malaxeur.

2. Dispositif d'étanchéité de l'arbre de malaxage selon la revendication 1,
caractérisé en se que
- l'ouverture (19) vers l'interieur de la cuve de malaxage (1) est recouverte par une tôle circulaire en deux parties (20) fixée sur la paroi latérale,
- la tôle circulaire (29) offre une ouverture (28) coaxiale au bout d'arbre (5) dans laquelle est fixé l'élément support (22) et
- que sur l'élément support (22), sur le côté donnant vers l'intérieur de la cuve de malaxage (2) vient buter une bague de serrage (27) dont le diamètre extérieur est supérieur à l'ouverture circulaire (28) dans la tôle divisée (29) et qui vue axialement est fixée à faible distance de la tôle divisée (29),
- de manière a ce que entre la bague de fixation (27) et l'élément support (22) avec les joints d'étanchéité en deux parties (20, 21) d'une part, et la bague d'étanchéité (23) avec la tôle divisée (29) sur la paroi latérale (2) d'autre part, l'on réalise la cavité en forme de labyrinthe, (15) qui par l'intermédiare d'une conduite (13) traversant la bague d'étanchéité pourra être remplie d'un fluide d'étanchéité.

3. Dispositif d'étanchéité de l'arbre de malaxage selon la revendication 1 ou 2,
caractérisé en se que
- sur l'élément support (22) soient fixés deux joints d'étanchéité (20, 21) à une certaine distance l'un de l'autre,
- sur la bague d'étanchéité (23) il est prevu deux surfaces d'appui en correspondance avec les joints d'étanchéité (20, 21) et que,
- la conduite d'amenée (13) du fluide d'étanchéité aboutisse dans l'espace entre les joints d'étanchéité (20, 21).

4. Dispositif d'étanchéité de l'arbre de malaxage selon la revendication 3,
caractérisé en se que,
les joints d'étanchéité (20, 21) ont des diemètres différents et que le joint d'étachnéité (20) avec le plus petit diemètre limite la cavité en forme de labyrinthe (15) à l'extrémité libre du bout d'arbre (5).

5. Dispositif d'étanchéité de l'arbre de malaxage selon la revendication 1 à 4,
caractérisé en se que,
les joints d'étanchéité (20 et 21) sont vissés sur l'élément support (22) par l'intermédiare d'une bague d'écartement divisible (24) et d'une bague de butée (25) en deux parties.

6. Dispositif d'étanchéité de l'arbre de malaxage selon la revendication 1 à 5,
caractérisé en se que,
la bague d'étanchéité en deux parties (23) est biseautée dans la zone d'appui des joints d'étanchéité (20 et 21) de manière à ce que les joints (20 et 21) soient posés en biais par rapport à la paroi latérale (2) et soumis à une pré-tension.
